# EUROPEAN PATENT APPLICATION

(11) **EP 4 434 630 A1**
(43) Date of publication of application: **25.09.2024**
(21) Application number: 23783709.1
(22) Date of filing: 27.06.2023
(51) Int. Cl.: B01L 7/00, G01N 21/64

(54) **PCR TEST CHIP AND PCR TEST DEVICE COMPRISING SAME**

(30) Priority: 31.01.2023 KR 20230013018; 23.06.2023 KR 20230081162
(71) Applicant: Genesystem Co., Ltd., Yuseong-gu Daejeon 34028 (KR)
(72) Inventor: PARK, Jun Hee, Daejeon 34207 (KR); PARK, Chan, Daejeon 35045 (KR); PARK, Gi Beom, Daejeon 34384 (KR); KIM, Dong Hyun, Sejong 30100 (KR); KOO, Hui Jeong, Daejeon 34007 (KR); LEE, Do Bu, Chungcheongbuk-do 28165 (KR); CHOI, Ok Ran, Chungcheongbuk-do 28165 (KR); SEO, Yu Jin, Gyeonggi-do 14295 (KR)
(74) Representative: Loyer & Abello
(86) International application number: PCT/KR2023/008916
(87) International publication number: WO 2024/162535

(57) **Abstract**

The present disclosure relates to a polymerase chain reaction (PCR) test chip and a PCR test device including the same. The PCR test chip includes: a body unit made of a light-transmitting material and including an inlet through which a sample is injected; a reaction chamber including a first chamber part recessed from a lower surface of the body unit toward an upper surface of the body unit, and recessed in a first region from the lower surface, and a second chamber part in which a reagent is accommodated, being further recessed than the first chamber part toward the upper surface of the body unit with a step difference from the first region inside the first region; and an inflow path that connects the inlet to the reaction chamber and guides the sample into the reaction chamber.

## Description

### TECHNICAL FIELD

The present invention relates to a PCR test chip, in which a reagent that reacts with a sample is accommodated and fixed in a reaction chamber to improve sensitivity when confirming test results, and a PCR test device including the PCR test chip.

### BACKGROUND ART

Polymerase chain reaction (hereinafter referred to as PCR) is a method of amplifying a particular target genetic material to be detected, and is a technique for making a large amount of copies of genetic material having the same base sequence by amplifying a small amount of genetic material. PCR is used to amplify human deoxyribonucleic acid (DNA) to diagnose various genetic disorders, or is applied to DNA of bacteria, viruses, or fungi to diagnose infectious diseases.

In general, PCR includes the following three steps that are performed repeatedly. The three steps include 1) a denaturing step of heating a sample solution containing a double-stranded DNA to a particular temperature, for example, about 95 °C, to separate the double-stranded DNA into single-stranded DNA, 2) an annealing step of, after the denaturing step, providing the sample solution with an oligonucleotide primer having a sequence complementary to a particular nucleotide sequence to be amplified, and cooling the primer and the single-stranded DNA to a particular temperature, for example, 55 °C, such that the primer is combined with a particular nucleotide sequence of the single-stranded DNA to form a partial DNA-primer complex, and 3) an extension (or amplification) step of, after the annealing step, maintaining the sample solution at an activation temperature of DNA polymerase, for example, 72 °C, such that a double-stranded DNA is formed based on the primer of the partial DNA-primer complex by using the DNA polymerase. By repeating the three steps several times, a target nucleic acid having a particular nucleotide sequence may be exponentially amplified.

To perform such PCR, a PCR chip equipped with a chamber for accommodating a reagent and a sample as well as a sample solution, and a PCR device which heats and cools the PCR chip to induce an amplification reaction and measures the results thereof. The PCR device is a specific unit for implementing amplification of a target nucleic acid, and various PCR devices have been developed.

PCR in the art enables only qualitative analysis of an amplified target nucleic acid by using separate electrophoresis after a reaction is completed, but recently, real-time PCR devices (i.e., rPCR devices), which are capable of quantitatively analyzing a target nucleic acid by detecting fluorescence intensity that is proportional to the concentration of an amplified genetic material by using an optical detection system, have also been developed. In addition, a portable real-time PCR device capable of performing PCR at a site where a sample is obtained has also been developed by miniaturizing a large-size PCR device used in laboratories. A portable PCR device uses a PCR chip (a biochip or a microchip), and uses a camera or a digital camera instead of a large and complicated light detection system.

The present disclosure relates to a PCR test chip which improves sensitivity in detecting the intensity of fluorescence emitted when a reagent and a sample react with each other, and which enables simultaneous detection of multiple target genes.

### DESCRIPTION OF EMBODIMENTS

### TECHNICAL PROBLEM

The present disclosure provides a polymerase chain reaction (PCR) test chip in which a reagent that reacts with a sample is accommodated and fixed in a reaction chamber to improve sensitivity when confirming a test result, and a PCR test device including the PCR test chip.

### SOLUTION TO PROBLEM

A polymerase chain reaction (PCR) test chip according to an aspect of the present disclosure includes: a body unit made of a light-transmitting material and including an inlet through which a sample is injected; a reaction chamber including a first chamber part formed recessed from a lower surface of the body unit toward an upper surface of the body unit, and recessed in a first region from the lower surface, and a second chamber part in which a reagent is accommodated, being further recessed than the first chamber part toward the upper surface of the body unit from the first region inside the first region; and an inflow path that connects the inlet to the reaction chamber and guides the sample into the reaction chamber.

In addition, it is preferable that the reaction chamber is provided in plurality in the body unit.

In addition, it is preferable that the reaction chamber is provided in plurality in the body unit, and the plurality of reaction chambers are connected to each other by a connection flow path such that the sample flows in one direction.

In addition, it is preferable that the reaction chamber is arranged to form a first row in which the reaction chambers are spaced apart from each other in a first direction, and a second row spaced apart from the first row and in which the reaction chambers are arranged between the chamber chambers of the first row and parallel to the first direction, and the reaction chambers constituting the first row and the reaction chambers constituting the second row are arranged in a zigzag manner.

In addition, it is preferable that, when the reaction chambers are referred to as first, second, ...., N-th chambers (N is a natural number) in order of distance to the inlet, the connection flow path connecting the N-th chamber to an (N+1)-th chamber includes: a first flow path having one end connected to the N-th chamber; a second flow flow path having another end connected to the (N+1)-th chamber; and a direction-changing flow path connecting the first and second flow paths, and having a bending part through which a flow direction of the sample is changed.

In addition, it is preferable that the bending part includes at least two bending parts.

In addition, it is preferable that the reaction chamber is provided in plurality in the body unit, the PCR test chip further includes a connection flow path connecting the reaction chambers to each other such that the sample flows in one direction, a cover part configured to close the inflow path, the connection flow path, and the reaction chambers is coupled to the lower surface of the body unit, the inflow path, the connection flow path, and the reaction chambers being provided as grooves from a lower surface of the body unit toward an upper surface of the body unit, and the cover part forms lower surfaces of the inflow path, the connection flow path, and the reaction chambers.

In addition, it is preferable that the cover part is provided in a form of a film to be arranged on a lower side of the body unit to transmit heat of a heating device for performing PCR, and is attached to the lower surface of the body unit.

In addition, it is preferable that a depth of the connection flow path recessed from the lower surface of the body unit is equal to a depth of the first chamber part.

In addition, it is preferable that the second chamber part includes a first inclined flow path formed in a direction in which the sample is introduced, and a second inclined flow path formed in a direction in which the sample is discharged from the second chamber part, the first inclined flow path is formed from a point spaced apart from the second chamber part by a certain distance to an inner circumferential surface of the second chamber part, such that a depth of the first inclined flow path from the lower surface of the body unit gradually increases toward the inner circumferential surface of the second chamber part, and the second inclined flow path is formed to face the first inclined flow path from a point spaced apart from the second chamber part by a certain distance to the inner circumferential surface of the second chamber part, such that a depth of the second inclined flow path from the lower surface of the body unit gradually increases toward the inner circumferential surface of the second chamber part.

In addition, it is preferable that widths of the first inclined flow path and the second inclined flow path increase toward the inner circumferential surface of the second chamber part such that the first inclined flow path and the second inclined flow path are rounded.

In addition, it is preferable that, at a side of the inlet through which the sample is introduced into the reaction chamber, the connection flow path includes a first expansion part having a width gradually increasing toward the reaction chamber, and at a side of an outlet through which the sample is discharged from the reaction chamber, the connection flow path includes a second expansion part having a width gradually increasing toward the reaction chamber.

In addition, it is preferable that the reagent includes at least two types of reagents to detect different target genes, and different reagents are accommodated in the plurality of reaction chambers to enable multiple diagnoses for one sample.

A PCR test device according to another aspect of the present disclosure includes: a main body; a PCR test chip mounted on the main body and including a body unit made of a light-transmitting material and including an inlet through which a sample is injected, a plurality of reaction chambers each including a first chamber part recessed from a lower surface of the body unit toward an upper surface of the body unit, and recessed in a first region from the lower surface, and a second chamber part in which a reagent is accommodated, being further recessed than the first chamber part toward the upper surface of the body unit from the first region inside the first region; a heating device provided in the main body to heat the PCR test chip; a light source provided in the main body to emit light toward the PCR test chip; a camera configured to, when the reagent containing a fluorescent dye reacts with the sample, photograph fluorescence emitted from the fluorescent dye; and an analysis unit configured to analyze an image obtained by the camera.

Here, it is preferable that the plurality of reaction chambers are arranged to form a first row in which the reaction chambers are spaced apart from each other in a first direction, and a second row spaced apart from the first row and in which the reaction chambers are arranged between the chamber chambers of the first row and parallel to the first direction, and the reaction chambers constituting the first row and the reaction chambers constituting the second row are arranged in a zigzag manner.

Here, it is preferable that, when the reaction chambers are referred to as first, second, ...., N-th chambers (N is a natural number) in order of distance to the inlet, the connection flow path connecting the N-th chamber to an (N+1)-th chamber includes: a first flow path having one end connected to the N-th chamber; a second flow flow path having another end connected to the (N+1)-th chamber; and a direction-changing flow path connecting the first and second flow paths, and having a bending part through which a flow direction of the sample is changed.

Here, it is preferable that a cover part configured to close the inflow path, the connection flow path, and the plurality of reaction chambers is coupled to the lower surface of the body unit, the inflow path, the connection flow path, and the plurality of reaction chambers being provided as grooves from a lower surface of the body unit toward an upper surface of the body unit, and the cover part is provided in a form of a film to transmit heat of the heating device and is attached to the lower surface of the body unit, and the cover part forms lower surfaces of the inflow path, the connection flow path, and the plurality of reaction chambers.

Here, it is preferable that the second chamber part includes a first inclined flow path formed in a direction in which the sample is introduced, and a second inclined flow path formed in a direction in which the sample is discharged from the second chamber part, the first inclined flow path is formed from a point spaced apart from the second chamber part by a certain distance to an inner circumferential surface of the second chamber part, such that a depth of the first inclined flow path from the lower surface of the body unit gradually increases toward the inner circumferential surface of the second chamber part, and the second inclined flow path is formed to face the first inclined flow path from a point spaced apart from the second chamber part by a certain distance to the inner circumferential surface of the second chamber part, such that a depth of the second inclined flow path from the lower surface of the body unit gradually increases toward the inner circumferential surface of the second chamber part.

Here, it is preferable that, at a side of the inlet through which the sample is introduced into the reaction chamber, the connection flow path includes a first expansion part having a width gradually increasing toward the reaction chamber, and at a side of an outlet through which the sample is discharged from the reaction chamber, the connection flow path includes a second expansion part having a width gradually increasing toward the reaction chamber.

### ADVANTAGEOUS EFFECTS OF DISCLOSURE

A polymerase chain reaction (PCR) test chip and the PCR test device including the same according to an embodiment of the present disclosure provide an effect of improving sensitivity when confirming a test result, by allowing a reagent that reacts with a sample to be accommodated and fixed in a reaction chamber.

In addition, according to an embodiment of the present disclosure, a plurality of reaction chambers are provided and filled with various types of reagents to provide an effect of detecting a plurality of target genes with a single injection of sample.

In addition, the reaction chamber is formed in a two-stage structure to fix a reagent in a deeper chamber part so as to provide an effect of collecting and fixing the reagent, and thus, when a sample reacts with the reagent, the intensity of fluorescence is concentrated to improve the visibility and thus improve the sensitivity or accuracy of detection.

In addition, a connection flow path connecting the reaction chambers to each other is provided with bending parts to effectively prevent the reagent in one reaction chamber from moving to an adjacent reaction chamber when the sample and the reagent react with each other, and thus, the accuracy of a test result is improved.

In addition, bubbles formed in the reaction chamber when the sample is injected are pushed along the streamlined shape of the reaction chamber and thus removed.

In addition, the inlet through which the sample flows into the reaction chamber and the outlet through which the sample is discharged from the reaction chamber are formed wider than the connection flow path, such that the sample may be easily distributed (diffused) into a plurality of reaction chambers.

### BRIEF DESCRIPTION OF DRAWINGS

FIG. 1 is a perspective view of a polymerase chain reaction (PCR) test chip according to an embodiment of the present disclosure.
FIG. 2 is a bottom perspective view of FIG. 1.
FIG. 3 is a bottom view of FIG. 1.
FIG. 4 is an enlarged view of FIG. 3.

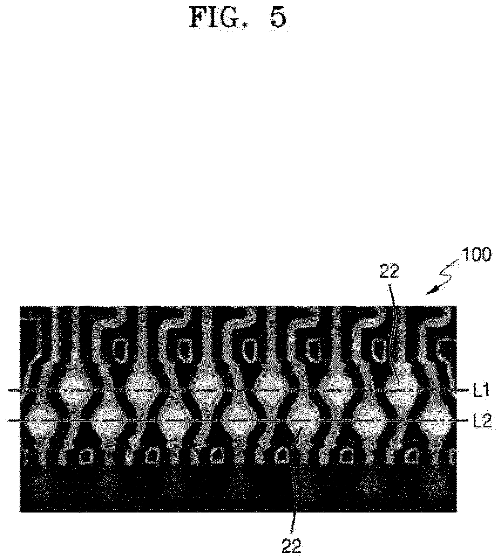

FIG. 5 is a cross-sectional view of FIG. 1.
FIG. 6 is a diagram illustrating that sensitivity is improved as a sample and a reagent react with each other in a chamber part.
FIG. 7 is a block diagram of a PCR device including a PCR test chip.

### MODE OF DISCLOSURE

Hereinafter, various embodiments of the present disclosure will be described with reference to the accompanying drawings. Various embodiments of the present disclosure may be variously modified and may have various embodiments, and particular embodiments are illustrated in the drawings and detailed descriptions related to the embodiments are described. However, this is not intended to limit various embodiments of the present disclosure to particular modes of practice, and it is to be appreciated that all changes, equivalents, and/or substitutes that do not depart from the spirit and technical scope of various embodiments of the present disclosure are encompassed in the present disclosure. With regard to the description of the drawings, similar reference numerals are used to refer to similar elements.

As used in various embodiments, the expressions "include", "may include", and other conjugates refer to the existence of a corresponding disclosed function, operation, or constituent element, and do not limit one or more additional functions, operations, or constituent elements. In addition, as used in various embodiments of the present embodiment, the terms "include", "have", and other conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

It should be understood that, when it is described that an element is "connected" to another element, the first element may be directly connected to the second element, and a third element may be "connected" between the first and second elements. On the other hand, it should be understood that, when it is described that a first element is "directly connected" or "directly coupled" to a second element, no further element is present between the first element and the second element.

The terms used in various embodiments of the present disclosure are used only to describe a particular embodiment, and are not intended to limit the various embodiments of the present disclosure. Singular forms are intended to include plural forms as well, unless the context clearly indicates otherwise.

Unless otherwise defined, all terms, including technical and scientific terms, used herein have the same meaning as commonly understood by those of skill in the art to which the present disclosure pertains based on an understanding of the present disclosure.

Terms, such as those defined in commonly used dictionaries, are to be interpreted as having a meaning that is consistent with their meaning in the context of the relevant art and various embodiments of the present disclosure, and are not to be interpreted in an idealized or overly formal sense unless expressly so defined herein.

The present disclosure relates to a chip used in a polymerase chain reaction (PCR) device, wherein a reagent is accommodated in the chip, and after a sample is injected into the chip, a target gene is detected by using the chip in the PCR device.

First, the term 'polymerase chain reaction (PCR)' used herein refers to a reaction in which a particular target nucleic acid molecule is amplified by using a thermostable deoxyribonucleic acid (DNA) polymerase. In PCR, in addition to the DNA polymerase, a reaction mixture containing divalent ions such as primers (e.g., forward primers or reverse primers), deoxynucleotide triphosphate (dNTP) mixtures, or Mg2+, which are oligonucleotides that may hybridize specifically to a target nucleic acid, may be used.

The 'primer' is used to initiate a PCR reaction, and refers to an oligonucleotide or polynucleotide that hybridizes complementary to template DNA. As the primer for the PCR reaction, a pair of a forward primer (or a sense primer) selected from sense strands in the same direction as that of a genetic code of a nucleic acid molecule to be amplified, and a reverse primer (or an antisense primer) selected from antisense strands complementary to the sense strands may be used.

The 'sample' refers to a genetic material to be amplified or a biological solution containing such a genetic material. In addition, the 'reagent' is for detecting the target genetic material and may include a primer or the like. The primer may consist of a pair of primers with a length of 15 bp to 30 bp that may be bound to both ends of a particular region of a target gene. In addition, as the DNA polymerase, an enzyme that does not lose its activity even at a high temperature of 90 °C or higher may be used.

Hereinafter, preferred embodiments of the present disclosure will be described with reference to the accompanying drawings. A PCR test chip 100 according to an embodiment of the present disclosure includes a body unit 10, a reaction chamber 20, and an inflow path 30.

The body unit 10 is made of a light-transmitting material and has an inlet 11 for injecting a sample. The body unit 10 is made of a light-transmitting material such that a fluorescent material may be detected by an optical detection device. According to the present embodiment, the body unit 10 may be made of a transparent polymer material. The body unit 10 may be formed in a rectangular shape, and has protruding walls 12 formed on the long sides of the rectangle such that a user may easily grip the body unit 10. Reinforcing protrusions 13 extending in the vertical direction are formed on inner surfaces of the protruding walls 12, respectively. The reinforcing protrusions 13 prevent a product of injection molding of the body unit 10 from being bent, and improves the rigidity of the body unit 10. Meanwhile, in order for the user to grip the body unit 10, grooves may be formed on the outer circumferential surfaces of the long sides of the body unit 10, instead of the protruding walls 12.

The reaction chamber 20 provides a space in which a sample and a reagent react with each other, and according to the present embodiment, includes a first chamber part 21 and a second chamber part 22.

The first chamber part 21 is depressed from the lower surface of the body unit 10 toward the upper surface. The first chamber part 21 is depressed from the lower surface of the body unit 10 to a depth of 0.3 mm to 0.5 mm. According to the present embodiment, the first chamber part 21 is formed to a depth of 0.4 mm. In a case in which the depth of the first chamber part 21 is less than 0.3 mm, there is a disadvantage in that the moving speed of the injected sample decreases, whereas in a case in which the depth is greater than 0.5 mm, there is a disadvantage in that the heat transfer efficiency to the reagent decreases. The first chamber part 21 is recessed by an area corresponding to a certain first region. The first region of the first chamber part 21 is formed in a circular shape as a whole, and has an inlet through which the sample is introduced, and an outlet through which the sample is discharged.

The second chamber part 22 is further recessed toward the upper surface with a step difference from the first region inside the first region. That is, the second chamber part 22 is recessed inside the first chamber part 21 with the step difference, and thus, the reaction chamber 20 is formed in a two-stage structure. A reagent is accommodated in the second chamber part 22. The second chamber part 22 is recessed from the lower surface of the body unit 10 to a depth of 0.8 mm to 1.1 mm. The second chamber part 22 preferably has a volume of 5 *µ*ℓ or greater in order to effectively secure the performance (i.e., luminescence) of a fluorescent material included in the reagent to be fixed. The second chamber part 22 is formed to a depth of 0.8 mm or greater to facilitate identification of the fluorescent material. In a case in which the second chamber part 22 is formed to a depth of 1.1 mm or greater, there is a disadvantage in that the thickness of the body unit 10 needs to be further reinforced, and the heat transfer efficiency to the reagent decreases. According to the present embodiment, the second chamber part 22 is formed to a depth of 1.0 mm.

According to the present embodiment, the reagent that reacts with the sample may include a primer or the like. In addition, the reagent may further include a fluorescent dye. Of course, depending on the PCR method, the fluorescent dye may be injected into the chip together with the sample. The fluorescent dye emits light in a particular wavelength range in a DNA extension (or amplification) step. At least two types of reagents are provided to detect different target genes, and different reagents may be accommodated in a plurality of reaction chambers.

In detail, according to the present embodiment, a plurality of reaction chambers 20 are provided, and different reagents are fixed in the reaction chambers 20 to enable multiple diagnoses by detecting different target genes with a single injection of the sample. For example, a reagent for detecting a particular target gene may be accommodated and fixed in some of a plurality of second chamber parts 22. In addition, a reagent for detecting another target gene may be accommodated and fixed in the other second chamber parts 22. In this case, each of the reagents may be fixed in a state in which the fluorescent dye is included therein. Of course, the fluorescent dye may be injected into the chip together with the sample. The same fluorescent dye may be fixed to different reagents or injected together with samples, and when the reagent in each second chamber part 22 reacts with a target gene and is amplified, emission of light may be detected to identify whether a reaction is performed in the second chamber part 22. That is, multiple diagnoses are enabled at once by emitting light with a single wavelength.

The reagent is fixed in the second chamber part 22, and the chip on which the reagent is fixed may be transferred to a place where a PCR test is required, and used as needed. The reagent may be fixed in the second chamber part 22 by a method such as natural drying, vacuum drying, or freeze drying. In addition, the surface of the reagent fixed in the second chamber part 22 may be coated by using a coating agent having waterproof and adhesive properties. The coating agent may be fixed with a reagent (e.g., a primer, a probe, or a premix) by using a biopolymer material that does not affect the properties of the reagent or a PCR result. The coating agent may have a property of being maintained in a solid state at room temperature and melting at a certain temperature or higher. For example, the coating agent may melt at 45 °C or higher. During a PCR process, when the chip into which the sample is injected is heated, the coating agent may melt such that the sample and the reagent react with each other. The coating agent may be made of any one of wax, agarose, paraffin, collagen, chitosan, and gelatin, or a mixture thereof.

Of course, the coating agent may be accommodated and fixed in the second chamber part 22 in a state in which the coating agent is mixed with the reagent. Even in this case, the reagent accommodated in the second chamber part 22 may be maintained in a solid state at room temperature, and when the chip into which the sample is injected is heated during the PCR process, the coating agent may melt such that the sample and the reagent react with each other.

The second chamber part 22 is provided with a first inclined flow path 221 formed in a direction in which the sample is introduced, and a second inclined flow path 222 formed in a direction in which the sample is discharged from the second chamber part 22. The first inclined flow path 221 is connected between a point spaced apart from the second chamber part 22 by a certain gap and the inner circumferential surface of the second chamber part 22, and is formed such that the depth thereof from the lower surface of the body unit 10 gradually increases toward the inner circumferential surface. The second inclined flow path 222 is formed in the same shape as that of the first inclined flow path 221. That is, the second inclined flow path 222 is formed at a position symmetrical to the first inclined flow path 221 to be connected between a point spaced apart from the second chamber part 22 by a certain gap and the inner circumferential surface of the second chamber part 22, and is formed such that the depth thereof from the lower surface of the body unit 10 gradually increases toward the inner circumferential surface.

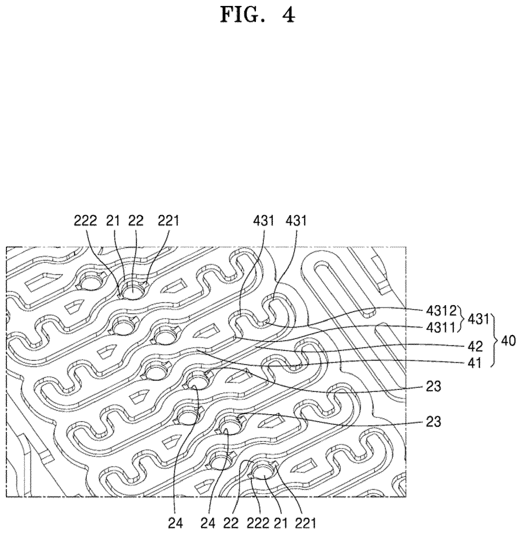

In addition, as illustrated in FIG. 4, the first inclined flow path 221 is formed to be round such that the width thereof increases toward the inner circumferential surface of the second chamber part 22. That is, the left and right side surfaces of the first inclined flow path 221 are formed to be round such that the widths thereof increase in the direction in which the sample flows, in the vicinity of a point at which the first inclined flow path 221 is connected to the second chamber part 22. Also, like the first inclined flow path 221, the second inclined flow path 222 is formed to be round such that the width thereof increases toward the inner circumferential surface of the second chamber part 22. The second inclined flow path 222 is arranged to face the first inclined flow path 221, and the left and right side surfaces is formed to be round such that the widths thereof increase toward the inner circumferential surface of the second chamber part 22.

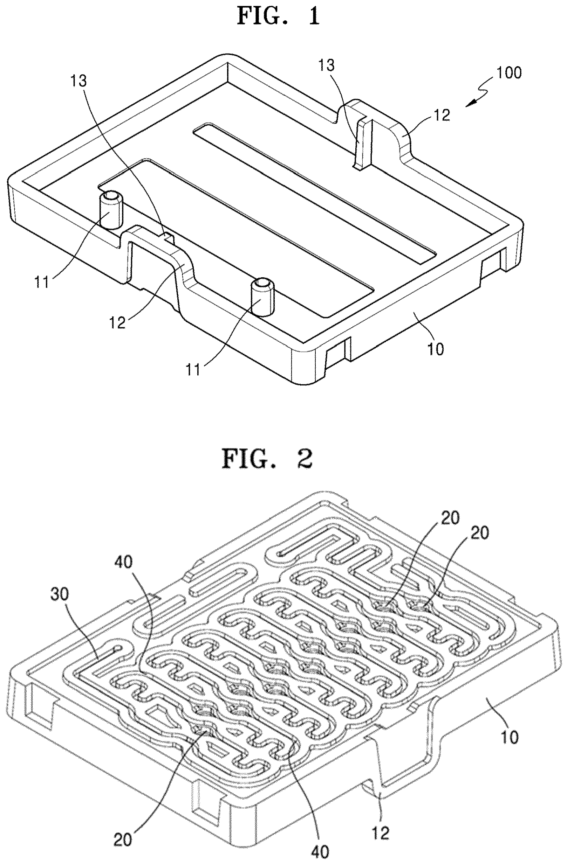

The inflow path 30 is provided to connect the inlet 11 to the reaction chamber 20 and guide the sample into the reaction chamber 20. According to the present embodiment, the inlet 11 is provided to protrude upward from the upper surface of the body unit 10. Referring to FIG. 1, two protrusions protruding upward are formed on the upper surface of the body unit 10 to vertically penetrate the body unit 10. Any one of the two protrusions may be used as the inlet 11 for injecting the sample. When the sample is injected into the inlet 11, the other protrusion communicates the flow path with outside air such that the sample may flow along the flow path formed in the body unit 10.

According to the present embodiment, a plurality of reaction chambers 20 are provided in the body unit 10 and connected to each other by a connection flow path 40 such that the sample flows in one direction.

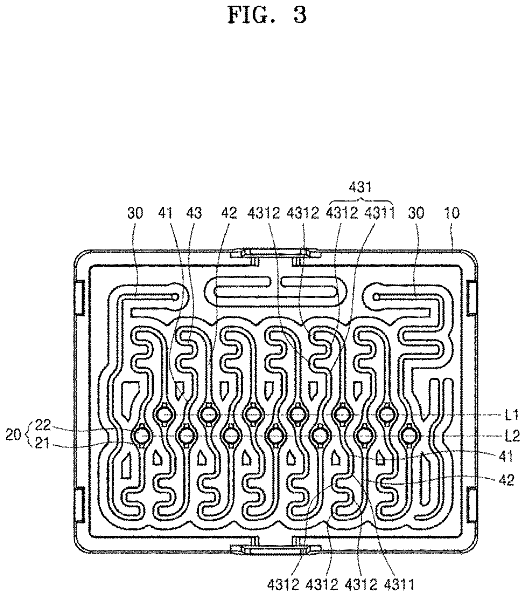

According to the present embodiment, as illustrated in FIGS. 2 and 3, the reaction chambers 20 are arranged in a first row and a second row. In the first row, the reaction chambers 20 are spaced apart from each other in a first direction. The reaction chambers 20 arranged in the first row are arranged on an imaginary straight line extending in one direction. The second row is spaced apart from the first row and parallel to the first direction, and the reaction chambers 20 of the second row are arranged between the reaction chambers 20 of the first row. Like the reaction chambers 20 of the first row, the reaction chambers 20 arranged in the second row are arranged on an imaginary straight line extending in one direction, and the respective imaginary straight lines in which the first row and the second row are arranged are parallel to each other. In the above structure, the reaction chambers 20 constituting the first row and the reaction chambers 20 constituting the second row are arranged in a zigzag manner. According to the present embodiment, a total of 13 reaction chambers 20 are formed, including 7 reaction chambers 20 arranged in the first row and 6 reaction chambers 20 arranged in the second row. As described above, reagents identical to or different from each other may be introduced into the respective reaction chambers 20. According to the present embodiment, up to 13 reagents may be fixed in the respective reaction chambers 20, and multiple diagnoses may be performed by distinguishing between target genes as many as the number of fixed reagents. However, the number of reaction chambers 20 is not limited to the above example, and various numbers of reaction chambers 20 and various intervals therebetween may be possible.

The connection flow path 40 is provided to connect the plurality of reaction chambers 20 to each other.

When the reaction chambers 20 are referred to as first, second, ...., N-th chambers (N is a natural number) in order of distance to the inlet 11, the connection flow path 40 connects the N-th chamber to the (N+1)-th chamber. Here, the phrase "order of distance to the inlet 11" refers to an order in which the sample sequentially reaches the reaction chambers 20 that is injected through the inlet 11 to pass through the reaction chambers 20 through the connection flow path 40. According to the present embodiment, the connection flow path 40 includes a first flow path 41, a second flow path 42, and a direction-changing flow path 43.

The first flow path 41 has one end connected to the N-th chamber and the other end extending toward the (N+1)-th chamber. The second flow flow path 42 has one end extending toward the N-th chamber and the other end connected to the (N+1)-th chamber. The direction-changing flow path 43 connects the first and second flow paths to each other. One end of the direction-changing flow path 43 is connected to the other end of the first flow path 41, and the other end of the direction-changing flow path 43 is connected to the one end of the second flow path 42. According to the present embodiment, the direction-changing flow path 43 includes a bending part 431 for changing the flow direction of the sample. According to the present embodiment, at least two bending parts 431 are provided.

As illustrated in FIG. 4, the bending part 431 according to the present embodiment includes first bending parts 4311 and second bending parts 4312. The first bending part 4311 changes the flow direction of the sample by approximately 90°, and the second bending part 4312 changes the flow direction of the sample by 180°. According to the present embodiment, the sample having flowed out of the N-th chamber changes in direction by approximately 90° through the first bending part 4311, then passes through three second bending parts 4312 in succession, then changes in direction again through the other first bending part 4311, and is introduced into the (N+1)-th chamber. According to the present embodiment, the bending part 431 includes two first bending parts 4311 and three second bending parts 4312, but the number of first bending parts 4311 and second bending parts 4312 are not limited thereto, and may vary.

When the sample is completely injected into the reaction chamber 20 provided in the body unit 10 and then reacts with the reagent, the bending part 431 prevents the sample from moving to the adjacent reaction chamber 20, such that a reaction result of the reaction chamber 20 is not mixed with reaction results of other reaction chambers 20 and reliability is ensured.

According to the present embodiment, the connection flow path 40 includes a first expansion part 23 and a second expansion part 24.

The first expansion part 23 is a section whose width gradually increases toward the reaction chamber 20 from the side of an inlet through which the sample flows into the reaction chamber 20. The first expansion part 23 is formed in a streamlined shape such that the sample flowing into the reaction chamber 20 fills the inner space of the reaction chamber 20 while being decelerated by the widened section.

The second expansion part 24 is a section whose width gradually increases toward the reaction chamber 20 from the side of an outlet through which the sample is discharged from the reaction chamber 20. The second expansion part 24 is formed to symmetrically face the first expansion part 23, and when the sample flows out of the reaction chamber 20, the second expansion part 24 narrows as the sample moves away from the reaction chamber 20 to increase the flow rate of the sample such that the sample easily moves to another adjacent reaction chamber 20.

According to the present embodiment, the depth of the connection flow path 40 recessed from the lower surface of the body unit 10 is equal to that of the first chamber part 21. As illustrated in FIG. 4, the second chamber part 22 provided inside the first chamber part 21 is formed to be deeper than the connection flow path 40, and a step part between the first chamber part 21 and the second chamber part 22 is formed to have the same depth as that of the connection flow path 40.

According to the present embodiment, a cover part 50 is coupled to the lower surface of the body unit 10.

The cover part 50 is provided to close the inflow path 30, the connection flow path 40, and the reaction chamber 20, which are provided as grooves from the lower surface toward the upper surface of the body unit 10. The cover part 50 is attached to the lower surface of the body unit 10 in a state in which the sample is accommodated and fixed in the reaction chamber 20. The cover part 50 forms the lower surfaces of the inflow path 30, the connection flow path 40, and the reaction chamber 20. That is, the sample injected through the inlet 11 is moved to the reaction chamber 20 through the inflow path 30 and the connection flow path 40, and the lower surfaces of the inflow path 30 and the connection flow path 40, and the reaction chamber 20 are formed by the cover part 50.

According to the present embodiment, the cover part 50 is arranged on the lower side of the body unit 10, and is provided in the form of a film to receive heat from a heating device 120 for performing PCR and attached to the lower surface of the body unit 10. The cover part 50 is made of a thin film to easily receive heat from the heating device 120, and may be made of a metal having excellent heat transfer efficiency or a polymer material including nanocarbons. The sample moves through the inflow path 30, the connection flow path 40, and the reaction chamber 20 by itself without using any power.

Hereinafter, actions or effects of the PCR test chip 100 according to the above configuration will be described in detail.

As illustrated in FIG. 2, the inflow path 30, a reaction flow path, and the reaction chamber 20 are formed in the form of grooves on the lower surface of the body unit 10 according to an embodiment of the present disclosure. First, a reagent is fixed to the second chamber part 22 of the reaction chamber 20. Reagents for detecting different target genes may be fixed in different reaction chambers 20. The lower surface of the body unit 10 is sealed by the cover part 50 in the form of a film. The cover part 50 closes the inflow path 30, the connection flow path 40, and the reaction chamber 20. According to the present embodiment, an adhesive region is provided at edges of the inflow path 30, the connection flow path 40, and the reaction chamber 20 such that the film-type cover part 50 may be attached thereto. The adhesive region is formed to be wider than the inflow path 30 and the connection flow path 40 to prevent leakage of the sample during sample injection. The adhesive region may be formed to have a width of 0.8 mm to 1.0 mm along the edges of the inflow path 30, the connection flow path 40, and the reaction chamber 20. In a case in which the width of the adhesive region is less than 0.8 mm, the adhesive strength of the cover part 50 is reduced, and in a case in which the width of the adhesive region is greater than 1.0 mm, the spatial arrangement of the reaction chamber 20 is restricted.

The reagent may be fixed in the reaction chamber 20 together with a coating agent. The chip in which the reagent is fixed may be stored separately, and the chip according to an embodiment of the present disclosure may be transported to a site where PCR is performed such that a sample is injected through the inlet 11 at the site and a test is performed through a PCR device. Thus, the PCR test chip 100 according to the present disclosure enables a PCR test to be performed quickly with a reagent prefixed therein, and enables multiple tests with a plurality of reagents prefixed therein.

The sample is injected through the inlet 11. Two protrusions are formed on the upper surface of the body unit 10, and any one of them may be used as the inlet 11. When the sample is injected through one selected inlet 11, the reaction chamber 20 provided in the body unit 10 is filled with the sample through the inflow path 30 and the connection flow path 40. The other inlet 11 communicates with outside air to allow the sample to move along a narrow flow path by itself.

The sample is introduced into the first reaction chamber 20 along the inflow path 30 and then introduced into the sequentially arranged reaction chambers 20. The sample flows out of the N-th chamber along the first flow path 41. When flowing out of the N-th chamber, the sample moves faster as it passes through the second expansion part 24, and thus easily moves to the (N+1)-th chamber. The sample advances while changing its flow path as it passes through the bending part 431 of the direction-changing flow path 43. The bending part 431 is provided between the N-th chamber and the (N+1)-th chamber to form a pressure boundary to prevent the sample from moving to an adjacent chamber when the sample reacts with the reagent. The sample having passed through the direction-changing flow path 43 is introduced into the (N+1)-th chamber through the second flow path 42. According to the present embodiment, the sample flows from the first chamber part 21 to the thirteenth chamber through a path as described above.

In addition, when the sample flows into the N-th chamber, the sample also flows along the first inclined flow path 221 as it enters the inlet. Because the depth of the first inclined flow path 221 and the gap between the side surfaces of the first inclined flow path 221 increase toward the second chamber part 22, the sample may effectively contact the reagent fixed to the second chamber part 22.

In addition, because the reaction chamber 20 according to the present embodiment is formed in a two-stage structure including the first and second chamber parts, and the reagent is fixed to the second chamber part 22, when the reagent is brought into contact with the sample and thus expands, bubbles are formed and collected in the second chamber part 22. The sample entering the second chamber part 22 along the first inclined flow path 221 may remove the bubbles by pushing them toward the second inclined flow path 222. Because the second chamber part 22 has a circular inner circumferential surface, the sample moves along the streamlined inner circumferential surface such that the bubbles are effectively removed. As the bubbles are removed, a reaction result of the sample and the reagent may be accurately obtained. In addition, the first and second inclined flow paths 221 and 222 are provided to remove PCR-inhibiting factors such as bubbles formed inside the reaction chamber 20 when the reagent is distributed.

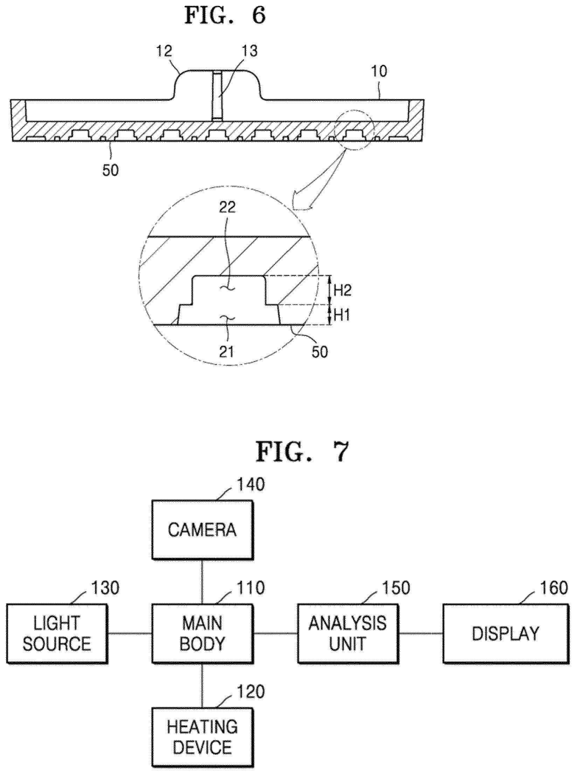

As illustrated in FIG. 6, according to the present embodiment, because the reagent is fixed to the second chamber part 22, when fluorescent substances are concentrated in a limited space and then images are obtained and analyzed through a PCR device, the sensitivity to reaction results may be improved, and thus, diagnostic accuracy may be improved. In addition, because the reagent reacts with the sample while being fixed in a well of the second chamber part 22 such that the movement of reaction samples between the reaction chambers 20 are suppressed, and thus, the reaction samples reacting with the sample are not mixed with each other, the reliability of reaction results may be further improved.

Meanwhile, according to another aspect of the present disclosure, a PCR device including the PCR test chip 100 is provided.

The PCR device according to the present embodiment is for performing PCR with the above-described PCR test chip 100 mounted thereon, and as illustrated in FIG. 7, the PCR device includes a main body 110 on which the PCR test chip 100 is mounted, a heating unit provided inside the main body 110 to provide heat to the chip 100, a light source 130 for emitting light toward the chip 100, a camera 140 configured to obtain an image by photographing fluorescence when a reagent and a sample react with each other, and an analysis unit 150 configured to analyze the image obtained by the camera 140.

The main body 110 includes a mounting part on which the chip 100 is mounted. A manipulation panel for performing PCR may be provided on the main body 110, and a plurality of input buttons may be provided on the manipulation panel to perform functions such as initiation and termination of a PCR test, or an operation of the heating device 120. The mounting part may protrude from the main body 110 and move to a position at which the chip 100 may be inserted, and after the chip 100 is seated on the mounting part, may move back into the main body 110. Of course, the shape of the mounting part is not limited to the above.

The heating unit is provided to heat the chip 100. The heating unit is provided on the lower side of the chip 100 to heat the reagent and the sample to a temperature for performing PCR, wherein the heat from the heating unit is transferred to the reagent and the sample through the film-type cover part 50, enabling rapid heating.

The light source 130 is provided to emit light toward the chip 100. The light source 130 may be provided by a light-emitting diode (LED) installed in the main body 110. A plurality of LEDs may be provided, and may provide light with a single wavelength or light with different wavelengths.

The camera 140 is provided to photograph fluorescence emitted from a fluorescent dye in response to the light emitted from the light source 130. The camera 140 is arranged above the chip 100 to photograph the plurality of reaction chambers 20 at once. The camera 140 may capture fluorescence images at regular intervals from the top of the chip 100.

The analysis unit 150 analyzes the image obtained by the camera 140. The analysis unit 150 analyzes a color of the image by comparing it with predetermined reference data. The predetermined reference data is data in which various target genes or diseases are previously matched with color types (red-green-blue (RGB) ratios) and intensities of emitted fluorescence, and the analysis unit 150 may calculate RGB ratios of the image obtained by the camera 140 by using an RGB analysis program, and compare the RGB ratios with the predetermined data. Result values obtained by the analysis unit 150 may be displayed on a display 160 to be provided to a user.

The present disclosure enables multiple tests by detecting various types of target genes with a single injection of a sample through the above process. The PCR device including the PCR test chip according to the present disclosure employs the above-described PCR test chip 100 as it is, and thus may provide the actions or effects provided by the PCR test chip 100 as they are.

The present disclosure is described above in detail with reference to preferred embodiments, but the present disclosure is not limited to the above embodiments, and various modifications may be made without departing from the scope of the present disclosure.

## Claims

1. A polymerase chain reaction (PCR) test chip comprising:
a body unit made of a light-transmitting material and comprising an inlet through which a sample is injected;
a reaction chamber comprising a first chamber part formed recessed from a lower surface of the body unit toward an upper surface of the body unit, and recessed in a first region from the lower surface, and a second chamber part in which a reagent is accommodated, being further recessed than the first chamber part toward the upper surface of the body unit from the first region inside the first region; and
an inflow path that connects the inlet to the reaction chamber and guides the sample into the reaction chamber.

2. The PCR test chip of claim 1, wherein the reaction chamber is provided in plurality in the body unit.

3. The PCR test chip of claim 1, wherein the reaction chamber is provided in plurality in the body unit, and
the plurality of reaction chambers are connected to each other by a connection flow path such that the sample flows in one direction.

4. The PCR test chip of claim 1, wherein the reaction chamber is arranged to form a first row in which the reaction chambers are spaced apart from each other in a first direction, and a second row spaced apart from the first row and in which the reaction chambers are arranged between the reaction chambers of the first row and parallel to the first direction, and
the reaction chambers constituting the first row and the reaction chambers constituting the second row are arranged in a zigzag manner.

5. The PCR test chip of claim 3, wherein, when the reaction chambers are referred to as first, second, ...., N-th chambers (N is a natural number) in order of distance to the inlet, the connection flow path connecting the N-th chamber to an (N+1)-th chamber comprises:
a first flow path having one end connected to the N-th chamber;
a second flow flow path having another end connected to the (N+1)-th chamber; and
a direction-changing flow path connecting the first and second flow paths, and having a bending part through which a flow direction of the sample is changed.

6. The PCR test chip of claim 5, wherein the bending part comprises at least two bending parts.

7. The PCR test chip of claim 1, wherein the reaction chamber is provided in plurality in the body unit, the PCR test chip further comprises a connection flow path connecting the reaction chambers to each other such that the sample flows in one direction,
a cover part configured to close the inflow path, the connection flow path, and the reaction chambers is coupled to the lower surface of the body unit, the inflow path, the connection flow path, and the reaction chambers being provided as grooves from a lower surface of the body unit toward an upper surface of the body unit, and
the cover part forms lower surfaces of the inflow path, the connection flow path, and the reaction chambers.

8. The PCR test chip of claim 7, wherein the cover part is provided in a form of a film to be arranged on a lower side of the body unit to transmit heat of a heating device for performing PCR, and is attached to the lower surface of the body unit.

9. The PCR test chip of claim 7, wherein a depth of the connection flow path recessed from the lower surface of the body unit is equal to a depth of the first chamber part.

10. The PCR test chip of claim 1, wherein the second chamber part comprises a first inclined flow path formed in a direction in which the sample is introduced, and a second inclined flow path formed in a direction in which the sample is discharged from the second chamber part,
the first inclined flow path is formed from a point spaced apart from the second chamber part by a certain distance to an inner circumferential surface of the second chamber part, such that a depth of the first inclined flow path from the lower surface of the body unit gradually increases toward the inner circumferential surface of the second chamber part, and
the second inclined flow path is formed to face the first inclined flow path from a point spaced apart from the second chamber part by a certain distance to the inner circumferential surface of the second chamber part, such that a depth of the second inclined flow path from the lower surface of the body unit gradually increases toward the inner circumferential surface of the second chamber part.

11. The PCR test chip of claim 10, wherein widths of the first inclined flow path and the second inclined flow path increase toward the inner circumferential surface of the second chamber part such that the first inclined flow path and the second inclined flow path are rounded.

12. The PCR test chip of claim 3, wherein, at a side of the inlet through which the sample is introduced into the reaction chamber, the connection flow path comprises a first expansion part having a width gradually increasing toward the reaction chamber, and
at a side of an outlet through which the sample is discharged from the reaction chamber, the connection flow path comprises a second expansion part having a width gradually increasing toward the reaction chamber.

13. The PCR test chip of claim 2, wherein the reagent comprises at least two types of reagents to detect different target genes, and different reagents are accommodated in the plurality of reaction chambers to enable multiple diagnoses for one sample.

14. A polymerase chain reaction (PCR) test device comprising:
a main body;
a PCR test chip mounted on the main body and comprising a body unit made of a light-transmitting material and comprising an inlet through which a sample is injected, a plurality of reaction chambers each comprising a first chamber part recessed from a lower surface of the body unit toward an upper surface of the body unit, and recessed in a first region from the lower surface, and a second chamber part in which a reagent is accommodated, being further recessed than the first chamber part toward the upper surface of the body unit from the first region inside the first region;
a heating device provided in the main body to heat the PCR test chip;
a light source provided in the main body to emit light toward the PCR test chip;
a camera configured to, when the reagent containing a fluorescent dye reacts with the sample, photograph fluorescence emitted from the fluorescent dye; and
an analysis unit configured to analyze an image obtained by the camera.

15. The PCR test device of claim 14, wherein the plurality of reaction chambers are arranged to form a first row in which the reaction chambers are spaced apart from each other in a first direction, and a second row spaced apart from the first row and in which the reaction chambers are arranged between the reaction chambers of the first row and parallel to the first direction, and
the reaction chambers constituting the first row and the reaction chambers constituting the second row are arranged in a zigzag manner.

16. The PCR test device of claim 14, wherein, when the reaction chambers are referred to as first, second, ...., N-th chambers (N is a natural number) in order of distance to the inlet, the connection flow path connecting the N-th chamber to an (N+1)-th chamber comprises:
a first flow path having one end connected to the N-th chamber;
a second flow flow path having another end connected to the (N+1)-th chamber; and
a direction-changing flow path connecting the first and second flow paths, and having a bending part through which a flow direction of the sample is changed.

17. The PCR test device of claim 14, wherein a cover part configured to close the inflow path, the connection flow path, and the plurality of reaction chambers is coupled to the lower surface of the body unit, the inflow path, the connection flow path, and the plurality of reaction chambers being provided as grooves from a lower surface of the body unit toward an upper surface of the body unit,
the cover part is provided in a form of a film to transmit heat of the heating device and is attached to the lower surface of the body unit, and
the cover part forms lower surfaces of the inflow path, the connection flow path, and the plurality of reaction chambers.

18. The PCR test device of claim 14, wherein the second chamber part comprises a first inclined flow path formed in a direction in which the sample is introduced, and a second inclined flow path formed in a direction in which the sample is discharged from the second chamber part,
the first inclined flow path is formed from a point spaced apart from the second chamber part by a certain distance to an inner circumferential surface of the second chamber part, such that a depth of the first inclined flow path from the lower surface of the body unit gradually increases toward the inner circumferential surface of the second chamber part, and
the second inclined flow path is formed to face the first inclined flow path from a point spaced apart from the second chamber part by a certain distance to the inner circumferential surface of the second chamber part, such that a depth of the second inclined flow path from the lower surface of the body unit gradually increases toward the inner circumferential surface of the second chamber part.

19. The PCR test device of claim 14, wherein, at a side of the inlet through which the sample is introduced into the reaction chamber, the connection flow path comprises a first expansion part having a width gradually increasing toward the reaction chamber, and
at a side of an outlet through which the sample is discharged from the reaction chamber, the connection flow path comprises a second expansion part having a width gradually increasing toward the reaction chamber.
